# FASCICULE DE BREVET EUROPEEN

(11) **EP 2 142 424 B1**
(45) Date de publication et mention de la délivrance du brevet: **06.04.2016**
(21) Numéro de dépôt: 07821661.1
(22) Date de dépôt: 22.10.2007
(51) Int. Cl.: B63B 35/44, F03D 9/00, H01L 31/04, B63B 3/08, B63B 7/08

(54) **STRUCTURE CELLULAIRE COMPOSÉE D'UNE OU DE PLUSIEURS COUCHES DE CELLULES DESTINÉES À CAPTER L'ÉNERGIE**
AUS EINER ODER MEHREREN ZELLENLAGEN BESTEHENDE ZELLENSTRUKTUR ZUM AUFFANGEN VON ENERGIE
CELLULAR STRUCTURE COMPOSED OF ONE OR MORE LAYERS OF CELLS INTENDED FOR CAPTURING ENERGY

(30) Priorité: 05.04.2007 CH 567072007
(43) Date de publication de la demande: 13.01.2010
(73) Titulaire: Vauban Technologies SARL, 2006 Neuchâtel (CH)
(72) Inventeur: SANDOZ, Alain, CH-2006 Neuchâtel (CH); HAENNI, Nicolas, CH-1292 Chambésy (CH)
(74) Mandataire: P&TS SA (AG, Ltd.)
(86) Numéro de dépôt international: PCT/EP2007/061297
(87) Numéro de publication internationale: WO 2008/125154

(56) Documents cités:
- DE-A1- 3 634 102
- GB-A- 2 383 978
- US-A- 4 543 903
- US-A- 6 100 600
- US-A1- 2006 090 789

## Description

### Domaine technique

L'invention concerne le domaine des dispositifs de production d'énergie, en particulier les dispositifs de production d'énergie à l'aide de cellules ou modules flottants.

L'invention concerne plus particulièrment un film cellulaire selon le préamble de la revendication 1 et une cellule flottante selon le préamble de la revendication 13.

### Art antérieur

On connaît dans l'art antérieur des dispositifs captant et transformant l'énergie disponible dans leur l'environnement, ainsi que des différentes manières de les grouper et de les organiser. On connaît en particulier des panneaux solaires photovoltaïques flottants. Des exemples sont notamment décrits dans les documents US20060090789, US4022187, US5483913, WO03100866, US5740562, US6508247, US5555877, US4786795, US20030221718, WO2006046843.

On connaît par ailleurs des dispositifs de production d'énergie fixes par rapport au sol (par exemple des panneaux solaires fixés sur le toit d'un bâtiment, une éolienne fixée au sommet d'un mât ou le panneau solaire d'une installation technique en milieu extérieur). Il existe également des dispositifs fixés sur un véhicule (par exemple, les capteurs solaires alimentant les batteries d'un bateau de plaisance). D'autres dispositifs mobiles ont une aire de mobilité confinée par un socle immobilier. Enfin, certains dispositifs flottants sont destinés à transmettre l'énergie disponible au dessus d'une surface liquide à la masse du liquide située en dessous de cette surface, par exemple pour chauffer une piscine, ou pour créer un mouvement sous la surface de l'eau pour l'oxygéner.

GB 2 383 978 est considéré comme l'état de la technique le plus proche de l'objet des revendications 1 et 13.

### Problème de cet art antérieur

Dans le cas des panneaux photovoltaïques reposant sur des structures flottantes, la conception statique des dispositifs ne confère pas à l'installation de production les propriétés de flexibilité et de solidité, ni de modularité et d'extensibilité, qui permettent de les utiliser sur des très grandes surfaces, par exemple pour recouvrir un lac entier ou des surfaces de plusieurs centaines ou milliers de mètres carrés. Les dispositifs connus ne sont en outre généralement pas adaptés au captage de différentes sources d'énergies qui peuvent être présentes à la surface d'un milieu liquide à des fins, d'une part de stabilisation du dispositif contre les atteintes des forces naturelles, et d'autre part de production d'énergie.

### Bref résumé de l'invention

L'invention a pour but de pallier ces inconvénients de l'art antérieur. L'invention a aussi pour but la réalisation d'unités de production électriques modulables et de taille variable.

Ces buts sont en particulier atteints selon l'invention par un film cellulaire composé d'une ou de plusieurs couches de cellules (11) flottantes destinées à capter l'énergie présente à la surface d'un milieu liquide (15) afin de la transformer en une forme d'énergie transportée en dehors du film,
ledit film comportant des cellules flottantes munies d'éléments photvoltaiques,
ledit film comportant des éléments de connexion (13) mécanique et électrique entre cellules permettant de les connecter entre elles de manière amovible,
caractérisé par un système de stabilisation contre la houle en contrôlant des tensions dans lesdits éléments de connexion mécanique, et par des moyens numériques de commande pour commander automatiquement en temps réel la position des cellules et/ou la tension entre les cellules.

Ces buts sont aussi atteints grâce à une cellule flottante selon la revendication 13. Enfin, ces buts sont atteints grâce à un assemblage de cellules organisées en une ou plusieurs couches et déployées à la surface d'un milieu liquide exempt des inconvénients de l'art antérieur. Les volumes de liquide déplacés par les cellules, les surfaces de contact entre chaque cellule et le milieu liquide, ainsi que les tensions appliquées à la périphérie de l'assemblage et transmises aux cellules par l'intermédiaire des attaches qui les relient, confèrent à l'ensemble les propriétés d'un film cellulaire flottant à la surface du dit liquide.

Les propriétés d'élasticité et de résistance du film lui sont conférées par des éléments structurels macroscopiques et par des composants actifs agissant à l'échelle des cellules, ainsi que par les membranes des cellules. Ces éléments peuvent être de nature biologique ou de nature artificielle. Une application de nature artificielle à grande échelle est présentée permettant de construire des unités de production industrielle d'électricité à partir des formes d'énergie présentes à la surface de plans d'eau libres, comme par exemple, mais de manière non restrictive, l'énergie photovoltaïque, l'énergie éolienne, et l'énergie mécanique de la houle et des courants présents dans le milieu liquide.

Par plan d'eau libre, on entend de manière non restrictive, par exemple, un lac naturel ou artificiel, un fleuve, un canal ou une rivière, une baie, un bras de mer, la mer ou l'océan.

Par cellule, on entend un élément modulaire, capable d'échanger une énergie électrique ou thermique avec son environnement, et capable d'être connecté mécaniquement et de préférence électriquement voire électroniquement à d'autres cellules du film. Les cellules sont par exemple des éléments rigides connectés de façon souple ou articulée à d'autres cellules. La taille d'une cellule est variable ; typiquement, elle occupe entre 0,1 et 10 mètres carrés afin de réduire le nombre d'éléments de connexion nécessaires tout en assurant une souplesse et une modularité suffisante. Des cellules beaucoup plus petites, ou plus grandes, peuvent cependant aussi être employées.

Par film, on entend un ensemble de cellules sensiblement plan, destiné à flotter à la surface d'un liquide, de façon à constituer un dispositif de production d'énergie flottant. Un film peut comporter des dizaines, des centaines ou des milliers de cellules sur une ou plusieurs couches. Un film peut comporter uniquement des cellules de taille identique, ou des cellules de taille variable. Il est aussi possible d'employer des cellules spécialisées pour certaines fonctions dans un film.

Certaines cellules du film captent les formes d'énergie présentes dans l'environnement immédiat de la surface du liquide et les transforment en une forme d'énergie qui peut être récupérée en dehors du dispositif, par exemple, mais de manière non restrictive, l'électricité ou la chaleur. Ces cellules peuvent être spécialisées dans le captage d'une seule forme d'énergie (par exemple, mais de manière non restrictive, l'énergie lumineuse, mécanique ou thermique) ou capter plusieurs de ces formes d'énergie. Les cellules du film peuvent avoir d'autres fonctions liées par exemple, mais de manière non restrictive, à la stabilité structurelle, la maintenance, la collecte de l'énergie produite, ou bien la collecte et la distribution d'informations de contrôle et de commande.

L'utilisation d'un film cellulaire de grandes dimensions permet la production industrielle d'électricité à partir des sources d'énergie disponibles à la surface des plans d'eau libres. Même si l'invention s'applique sans restriction à partir d'une seule cellule et par incréments sans limites intrinsèques au concept, on entend par grandes dimensions des surfaces pouvant aller par exemple, mais de manière non restrictive, jusqu'à plusieurs centaines d'hectares ou comprenant plusieurs millions de cellules.

Dans ces conditions, les parties des cellules transformant l'énergie ambiante en électricité pourront être par exemple, mais de manière non restrictive, des générateurs photovoltaïques, des éoliennes à axe vertical ou des hélices subaquatiques à axe vertical ou horizontal pour récupérer l'énergie de courants subaquatiques, et/ou encore des dispositifs captant l'énergie mécanique de la houle et la transformant en électricité. Au moins certaines cellules peuvent exploiter deux types d'énergie différents et des films comportant des cellules de différents types sont aussi envisageables.

L'invention est modulaire et extensible sans restriction, les cellules étant assemblées entre elles de façon modulaire et amovible. Dans le cas d'une installation de captage industriel d'énergie, l'installation a entre autres propriétés, les propriétés suivantes :
- L'installation est mobile, dans le sens qu'elle peut être déplacée à la surface du milieu liquide ou en direction d'un autre site sans qu'il ne soit nécessaire de modifier les cellules.
- L'installation peut être reconfigurée, dans le sens que la forme qu'elle occupe à la surface du milieu liquide peut être altérée.
- L'installation peut être montée, déployée, démontée et retirée de manière incrémentale et sa mise en production peut être partielle. La taille ou la disposition des incréments ne dépendent pas de la configuration initiale, rendant l'installation librement extensible. Il est possible d'ajouter des cellules, ou d'en retirer, sans devoir intervenir sur les cellules existantes.
- L'installation ne requiert pas d'aménagements de la surface du milieu liquide utilisée et elle peut être démantelée sans y laisser de trace.

### Brève description des figures

L'invention sera mieux comprise à la lumière de la description et des figures qui s'y rapportent, dans lesquelles :
Les figures 1A et 1B décrivent localement deux films composés chacun d'un ensemble de quatre cellules vues de dessus;
La figure 2 représente la coupe dans le plan vertical d'une bouée torique qui constitue l'élément de flottaison de la cellule de production, ainsi que la coupe du noyau avec un support pour un panneau solaire;
La figure 3 représente une cellule de production composée de sa bouée, du noyau et d'un panneau solaire avec son support orientable et inclinable;
La figure 4 représente une cellule de stabilisation au vent comprenant une éolienne à axe vertical;
La figure 5a représente une cellule de stabilisation au courant comprenant une hélice subaquatique à axe vertical;
La figure 5b représente une cellule de stabilisation au courant et de captage d'énergie cinétique du courant comprenant une turbine partiellement immergée et une hélice subaquatique à axe horizontal;
La figure 6 représente l'amarrage de l'installation sur les bords d'un plan d'eau et sur le fond du bassin;
La figure 7 représente le scellement étanche du noyau par un joint maintenu par la pression de la bouée;
La figure 8 représente la disposition d'un panneau incliné et orienté relativement à une cellule;
La figure 9: représente le mécanisme d'attache du panneau au socle permettant de régler pour le panneau les paramètres de positionnement que sont l'inclinaison, l'orientation et l'intervalle entre le point d'attache et le centre du panneau;
La figure 10 représente une voile solaire flottante et tractée à la surface d'un plan d'eau, destinée à l'approvisionnement énergétique d'un bateau selon un mode de réalisation préférentiel de l'invention.

### Description détaillée et modes de réalisation préférentiels de l'invention

L'invention sera décrite à deux niveaux : au niveau macroscopique du film (I) ; et au niveau élémentaire d'une cellule et de ses voisines (II). L'application à la production industrielle d'électricité à la surface de plans d'eau libres est décrite dans (III).

### I. Niveau macroscopique.

Dans cet exemple, le dispositif de l'invention comporte deux composants et six sous-systèmes :

### I.1. Premier composant : la surface de production.

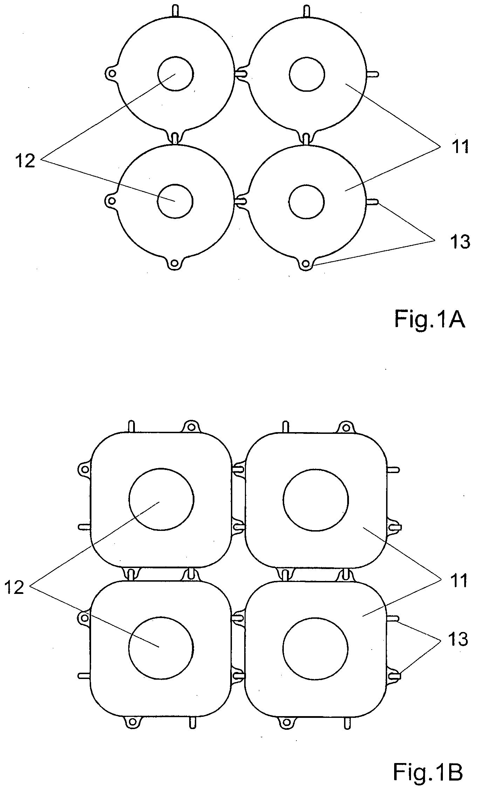

La surface de production est constituée d'un tissu de cellules juxtaposées, rendues chacune solidaire de ses voisines immédiates par l'intermédiaire d'attaches (voir figure 1, décrite ci-dessous). Les attaches peuvent être de nature par exemple, mais de manière non restrictive, mécanique, électromagnétique, chimique, biologique, ou autre. Les attaches peuvent être munies d'un dispositif permettant de mesurer en temps réel la tension transmise à une cellule par les cellules voisines.

Les figures 1A et 1B représentent quatre cellules juxtaposées sur une surface liquide dans deux configurations différentes, vues de dessus. Dans la partie du haut (figure 1A), les bouées sont circulaires. Dans la partie du bas (figure 1B), les bouées sont de forme carrée avec des angles arrondis. Différentes formes de bouées permettent différentes propriétés d'adhérence du film avec le milieu liquide, en particulier en conséquences des différences des aires des surfaces de contact et des volumes de liquide déplacés. La référence 11 indique deux cellules avec leur noyau clair placé au centre indiqué par (référence 12). La référence 13 indique les attaches qui servent à solidariser par exemple mécaniquement une cellule avec ses voisines.

### I.2. Second composant : dispositif de tension périphérique.

Le dispositif de tension périphérique se compose d'un ensemble de tenseurs réglables attachés aux cellules situées en périphérie du film et dont le rôle est d'une part de maintenir ce dernier tendu, de l'appliquer à la surface du milieu liquide et de contrôler sa position relativement à l'étendue de cette surface. Ce système de contrôle de la position des cellules peut être commandé par un logiciel, automatiquement et en temps réel.

La position et/ou la tension peuvent par ailleurs être contrôlés à l'aide de nervures entre les cellules (voir section I.4) ou automatiquement en ajustant la tension d'un réseau de câbles entre les cellules.

### I.3. Premier sous-système : le sous-système de flottaison.

Le film flotte à la surface du milieu liquide sous l'effet de la poussée d'Archimède appliquée par le milieu liquide à chacune des cellules du tissu. L'ensemble des cellules en contact avec le milieu liquide constitue le sous-système de flottaison. Il est aussi possible d'imaginer un film comportant des cellules qui ne flotteraient pas mais seraient supportées par d'autres cellules plus légères.

### I.4. Deuxième sous-système : le sous-système de stabilisation du film.

Le dispositif de tension périphérique décrit précédemment dans la section 1.2 permet de stabiliser la position du film. Les tensions périphériques sont transmises aux cellules internes du film à travers les composants structurels des cellules (voir section III.1.1 plus bas). Un réseau de nervures constitué de cellules aux structures robustes permet de réaliser une structure squelettique qui absorbe les tensions les plus fortes sans qu'elles ne s'appliquent entièrement aux cellules internes du film.

Le réseau de nervures a pour objectif de fournir une résistance structurelle au film, sous la forme d'une trame qui répartit et absorbe les tensions mécaniques générées par les forces externes (vents, courants, vagues, dilatation thermique, etc.) qui s'appliquent à l'ensemble du film ou à certaines de ses parties. Il est réalisé avec certaines cellules spécialisées, distinctes des autres cellules du film, qui ont pour fonction de constituer un squelette donnant une structure au film cellulaire à la manière d'un filet de mailles. Ces cellules sont construites de manière plus solide que les autres cellules. Un ensemble de cellules de ce type qui sont connectées à la suite les unes des autres à la manière d'une chaîne constituent une nervure ou un segment de nervure. Le réseau ainsi forme est appelé réseau de nervures.

Le réseau de nervures peut former une trame de cellules immergées, au dessus desquelles sont attachées et reposent les cellules du sous-système de captage d'énergie. Dans ce cas, les cellules du réseau de nervures peuvent avoir une masse volumique proche de celle du milieu aquatique et constituer ainsi un ancrage flottant du film cellulaire à sa surface.

La structure du réseau de nervures permet d'y loger les conducteurs qui collectent l'énergie et l'évacuent vers l'extérieur du dispositif, ainsi que les éléments des sous-systèmes de maintenance et de contrôle et de commande qui relient plusieurs cellules.

Les cellules du réseau de nervures peuvent servir à stocker des composants comme des ordinateurs embarqués, des contrôleurs, des bonbonnes d'air comprimé ou des batteries.

Dans ce dernier cas, les batteries peuvent servir à stocker le surplus d'énergie produite à un moment et dont l'évacuation poserait des problèmes d'absorption par le réseau de distribution externe, et le restituer à un moment où le captage local d'énergie baisse (par exemple, tombée de la nuit ou passage d'un nuage au dessus d'une installation de production photovoltaïque).

Le réseau de nervures se distingue du sous-système de collecte en ce qu'il peut ne comprendre aucune cellule destinée à capter l'énergie du milieu ambiant. Il est cependant aussi possible de placer des éléments photovoltaïques ou d'autres éléments de captage de l'énergie sur le réseau de cellules formant les nervures. En outre, les éléments structurels du sous-système de stabilisation sont de préférence directement rattachés au réseau de nervures. Le réseau de nervures (cellules formant une infrastructure plus solide) peut par ailleurs être le réceptacle des canaux de collecte. Comme dans une feuille d'érable, il doit être possible de relier une cellule à un point d'évacuation par un canal continu si l'énergie collectée par cette cellule doit être évacuée partiellement ou en totalité à un moment donné. Selon la manière dont les canaux sont maillés et dont les flux qui les traversent sont configurés en temps réel, l'énergie qui circule dans le réseau peut emprunter différents chemins, depuis des cellules vers l'extérieur, ou vers d'autres cellules, par exemple celles qui sont munies de batteries pour stocker l'énergie produite.

L'environnement du film peut le soumettre à différentes forces issues des formes d'énergie qui y sont présentes et qui pourraient le déstabiliser. Le sous-système de stabilisation a pour rôle d'atténuer chacun de ces facteurs déstabilisants en captant une partie suffisante de l'énergie correspondante et en l'évacuant du film par l'intermédiaire du sous-système de collecte de l'énergie produite (voir I.6 plus bas).

### I.5. Troisième sous-système : le sous-système de collecte d'énergie de l'environnement.

Le sous-système de collecte d'énergie de l'environnement se compose de toutes les cellules qui captent l'énergie présente dans l'environnement du film. Il s'agit entre autres des cellules qui font partie du sous-système de stabilisation, mais pas uniquement, l'énergie lumineuse ou l'énergie thermique, par exemple, pouvant ne pas être de nature à déstabiliser le film. En outre, les formes potentiellement déstabilisantes peuvent déjà être captées à des niveaux qui ne sont pas dangereuses pour le film. Par exemple, l'énergie de la houle peut être récupérée et amortie par des cellules spécialisées au bord du film.

Comme indiqué, certaines cellules peuvent dans une variante capter plusieurs formes d'énergie. Plusieurs cellules dans une même couche du film, ou dans des couches différentes, peuvent collecter différentes formes d'énergie. Les cellules de collecte de l'énergie peuvent être par exemple munies d'éléments photovoltaïques, éoliens, de captage de la houle, etc.

### I.6. Quatrième sous-système : le sous-système de collecte de l'énergie produite.

Ce sous-système est un ensemble de canaux qui empruntent le réseau de nervures parcourant le film (voir I.4) et collectent la production d'énergie individuelle des cellules, la multiplexent et la conduisent en direction de dispositifs externes de consommation, de stockage ou d'évacuation de l'énergie ainsi produite. L'énergie peut être transmise à travers les cellules ou par des câbles ou tuyaux entre les cellules, chaque cellule pouvant comporter des moyens de connexion électriques pour la connecter à plusieurs cellules voisines afin de transférer l'énergie produite. Il est aussi possible d'employer des cellules spécialisées pour le transport, la collecte et la transformation de l'énergie (par exemple des cellules munies de transformateurs électriques, d'onduleurs, de convertisseurs de fréquence, de batteries, etc). Dans une variante, l'énergie électrique produite transite par les cellules de collecte de l'énergie connectées électriquement en série ou en parallèle.

### I.7. Cinquième sous-système : le sous-système de maintenance.

Un sous-système de maintenance peut être conçu de manière à délivrer à chaque cellule les éléments et les traitements nécessaires à son bon fonctionnement, à sa réparation ou à son remplacement. Ce sous-système emprunte le réseau de nervures qui parcourt le film (voir I.4). Il est aussi possible de prévoir des cellules spécialisées, par exemple des cellules intégrant des dispositifs de commande numériques, des actuateurs, etc.

### I.8. Sixième sous-système: le sous-système de contrôle.

Un sous-système de contrôle peut être conçu de manière à ce que les paramètres propres à chaque cellule soient mesurés, contrôlés et commandés de manière individuelle. Tout comme les sous-systèmes de collecte de l'énergie produite et de maintenance, le sous-système de contrôle peut emprunter le réseau de nervures mis en place pour la réalisation du sous-système de stabilisation de l'installation, et/ou transiter par des cellules spécialisées.

Le calibrage des sous-systèmes et leurs fonctions dépendent de la taille du film, ainsi que de la nature et de la taille des cellules.

### II. Niveau élémentaire

Au niveau élémentaire, l'invention est décrite par ses cellules et à l'aide des éléments structurels qui permettent de rendre solidaires entre elles chaque cellule et ses voisines.

Comme dans un tissu organique, chaque cellule peut avoir un ou plusieurs rôles, notamment en relation avec les composants et les sous-systèmes du film considérés depuis le niveau macroscopique. Des cellules spécialisées peuvent aussi être employées.

Une cellule peut capter l'énergie du milieu et la transformer en une forme transportable. Une cellule peut servir de support à un sous-système. Une cellule peut simplement avoir pour rôle de fournir un supplément de surface de contact ou de portance entre le film cellulaire et le milieu liquide.

L'invention ne fixe pas de limite inférieure ou supérieure à la taille des cellules. Celle-ci doit être adaptée à l'élément liquide considéré, à la nature, à la disposition et à l'exposition aux éléments environnementaux de sa surface, ainsi qu'aux besoins en énergie produite pour laquelle l'installation est mise en oeuvre.

### III. Application à la production industrielle d'électricité sur plans d'eau libres

Un plan d'eau libre est, par exemple et de manière non restrictive, un lac naturel ou artificiel, un fleuve, un canal ou une rivière, une baie, un bras de mer, la mer ou l'océan. Les éléments naturels peuvent s'exercer librement sur un plan d'eau libre. Dans le cas d'un film cellulaire déployé sur un plan d'eau libre, l'énergie transmise au film par l'intermédiaire de ces éléments peut se présenter sous différentes formes, comme par exemple et de manière non restrictive, la lumière, la chaleur, la solidification de la surface liquide, la houle, les courants du milieu aquatique, le vent, etc.

Certaines de ces formes d'énergie peuvent être captées et transformées, par exemple, mais de manière non restrictive, en chaleur ou en électricité. Dans le cas de l'application du film cellulaire décrite ci-dessous, la forme d'énergie produite est l'électricité et les éléments pris en compte sont la lumière (énergie photovoltaïque), le vent (énergie éolienne), les courants du milieu aquatique (énergie mécanique due au déplacement latéral des masses d'eau, par exemple à la surface d'un fleuve en amont d'une retenue de production hydroélectrique au fil de l'eau), et la houle (énergie mécanique due au déplacement vertical des masses d'eau). L'application n'exclut cependant ni la production, ni le captage, d'autres formes d'énergie, par exemple à des fins de stabilisation de l'installation ou de moyen d'évacuation avant la transformation en électricité en dehors du film.

### III.1. Description de la cellule

Dans le cas de la production industrielle d'électricité sur plans d'eau libres, la cellule se compose de préférence de trois éléments : la bouée, le noyau, et (facultativement) le ou les composants de transformation de l'énergie ambiante en énergie électrique.

III.1.1. La bouée est par exemple un tore pneumatique gonflable composé :
1) d'une structure intérieure assurant la solidité et la flexibilité nécessaires pour répartir les tensions latérales transmises par le film, et permettant de fixer les attaches ; et
2) d'une membrane élastique.

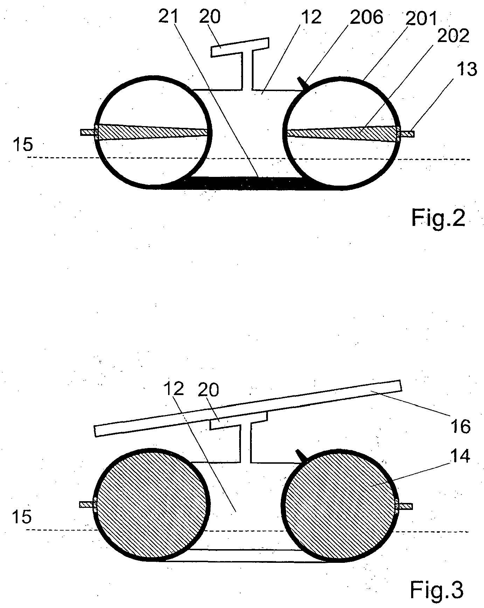

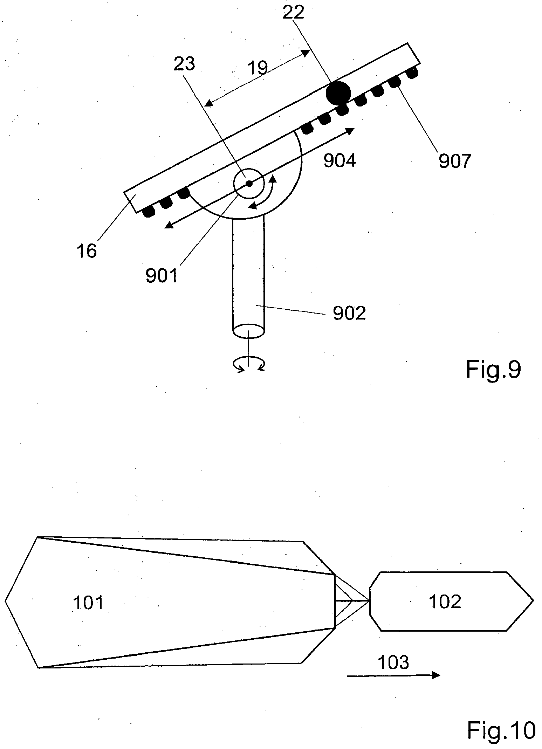

La forme de la bouée (voir figure 1) peut être adaptée de manière à augmenter les surfaces de contact ou permettre de déplacer un plus ou moins grand volume d'eau. La membrane enveloppe la cellule et abrite les éléments structurels et les supports aux attaches externes qui confèrent à l'ensemble ses propriétés de film cellulaire. Un exemple de bouée est représenté sur la figure 2, qui représente une cellule en coupe verticale passant par son axe central. La référence 201 indique l'enveloppe de la bouée qui constitue la membrane de la cellule. La référence 202 indique un élément de structure interne qui assure la solidité et la flexibilité du dispositif, en l'occurrence, mais de manière non restrictive, une ceinture adhérant le long de la grande circonférence à la paroi interne de la membrane. La référence 13 est une attache latérale fixée à la structure à travers la membrane. Le noyau central est vu en coupe selon un plan vertical ; la référence 21 est le lest qui est logé dans le noyau 12 et 206 est une valve de la bouée qui peut être une valve électromécanique connectée à un système de mesure et de distribution d'air comprimé. La référence 20 est un support pour panneau solaire, qui est illustré notamment par la figure 9 décrite plus loin. La référence 15 est la surface du plan d'eau, qui correspond également à la ligne de flottaison de la cellule. La forme et la surface de la partie de la cellule située en dessous de la ligne de flottaison sont conçues de manière à maximiser l'adhérence de la cellule au liquide, tout en garantissant une rétraction au dessus de la surface en cas de gel.

Les attaches 13 sont situées sur les bords de la cellule, conformément à l'illustration de la figure 1 et servent à solidariser les cellules les unes avec les autres en un film cellulaire flexible flottant à la surface du milieu liquide. Ces attaches peuvent être, par exemple, mais de manière non restrictive, des dispositifs mécaniques comme des anneaux et des mousquetons. La conception de la cellule lui donne une résistance et une élasticité propres à fournir l'effet stabilisant recherché à travers les tensions superficielles réparties sur la surface de production. En stock ou lors d'un transport, la bouée peut être dégonflée à l'aide d'une ou de plusieurs valves.

III.1.2. Le noyau est une boîte cylindrique qui peut servir de socle. pour le composant de transformation de l'énergie, de nacelle pour un lest, et de réceptacle ou de support pour les composants des sous-systèmes de l'installation (voir sections I.3 à I.8).

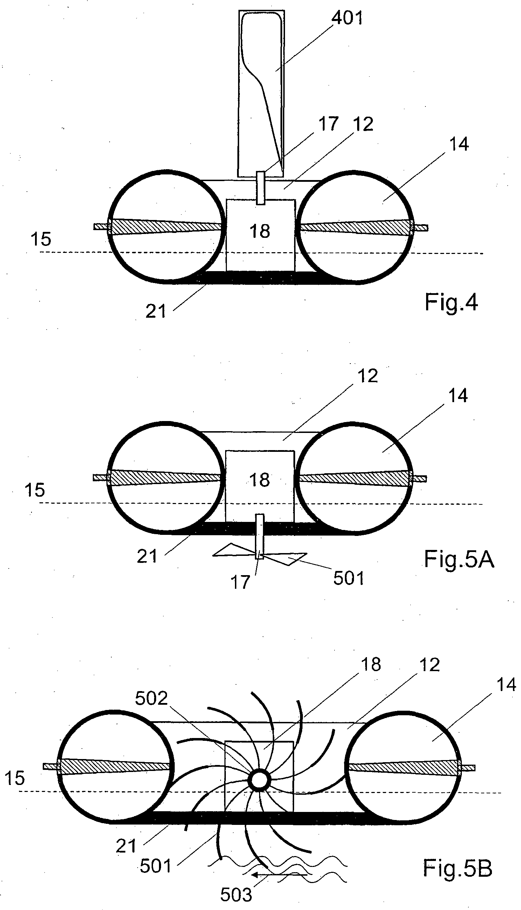

III.1.3. Le composant de transformation de l'énergie peut être par exemple, mais n'est pas restreint à, un panneau photovoltaïque (voir figure 3, décrite ci-dessous) ou une éolienne à axe vertical (voir figure 4 décrite ci-dessous) ou une hélice à axe vertical (voir figure 5a décrite ci-dessous) ou encore un dispositif transformant l'énergie des vagues en électricité en freinant le mouvement vertical de la cellule soulevée par l'onde et en transmettant son énergie à un piston couplé à un alternateur, ou encore une turbine à axe horizontal captant l'énergie cinétique du courant s'écoulant à la surface du plan d'eau (voir figure 5b décrite ci-dessous).

La figure 3 représente en coupe verticale une cellule complète destinée à capter l'énergie photovoltaïque. On y distingue la bouée 14, le noyau 12 et le panneau 16 reposant sur son support orientable 20 et inclinable qui fait partie du noyau 12 (voir figure 9, décrite plus loin), ainsi que la ligne de flottaison de la cellule 15.

La figure 4 représente une cellule employée pour soustraire l'énergie au vent et stabiliser l'installation à l'aide d'une éolienne à axe vertical. La référence 401 est l'hélice de l'éolienne et la référence 402 est l'axe vertical. On distingue également un alternateur 18, le noyau de la cellule 12, la bouée 14 ainsi que la ligne de flottaison 15. La quantité de lest 21 est adaptée en fonction inverse du poids de l'alternateur afin que le film présente une adhérence homogène avec le milieu liquide.

Les figures 5a et 5b représentent une cellule employée pour soustraire l'énergie aux courants subaquatiques et stabiliser l'installation à l'aide d'une hélice subaquatique 501 à axe vertical 17 (figure 5a) ou à axe horizontal 502 (figure 5b). On peut aussi distinguer l'alternateur 18, le noyau 12 et la bouée 14, ainsi que la ligne de flottaison 15, ainsi que le sens du courant subaquatique 503 sur la figure 5b.

Dans le cas des figures 5a et 5b, le calcul du lest 21 peut être adapté au poids de l'alternateur dont le poids peut remplacer une partie de ce lest dans sa fonction structurelle globale.

La figure 5b présente l'avantage d'être à priori plus rentable et plus efficace pour la stabilisation du film contre les courants.

Les cellules employées pour stabiliser localement l'installation contre les éléments et qui agissent à la surface ou sous la surface du plan d'eau sur lequel est déployé le film cellulaire fonctionnent selon le principe suivant : plutôt que d'abriter l'installation du vent, des vagues, des courants, etc. en formant une sorte de rempart mécanique, ces cellules captent l'énergie contenue dans ces éléments naturels et la transforment en une énergie qui peut être évacuée du film cellulaire pour être récupérée. Elles fonctionnent donc comme des cellules de la surface de production et emploient les mêmes canaux pour l'évacuation de l'énergie captée, mais leur finalité est en priorité la stabilité du film.

Ces cellules employées pour stabiliser le film contre les éléments sont donc calibrées, configurées et placées en priorité en fonction de critères de stabilité. Selon leur type, elles peuvent cependant également capter l'énergie présente dans le milieu naturel à des niveaux auxquels ces dernières ne mettraient pas en danger l'installation : les éoliennes à axe vertical qui sont utilisées pour stabiliser le film cellulaire contre le vent, par exemple, fonctionnent déjà dès que le vent dépasse quelques m/s.

### III.2. Composants et sous-systèmes

### III.2.1. Surface de production

La surface de production est composée des cellules conformément à la section III.1 de la description.

### III.2.2. Dispositif de tension périphérique

Le film peut être maintenu en place à la surface du plan d'eau à l'aide d'un ensemble de tenseurs amarrés, par exemple, mais pas de manière restrictive, au bord ou au fond de l'eau.

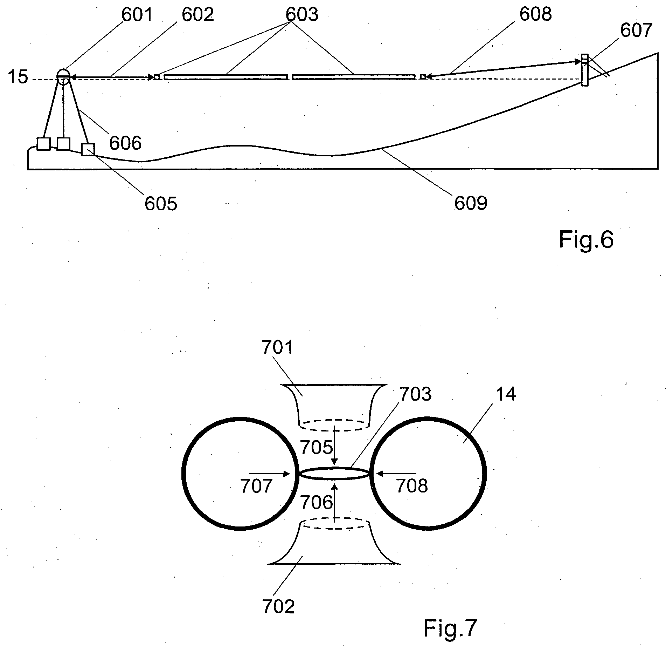

La figure 6 représente l'amarrage d'une installation en coupe dans le plan vertical. La référence 601 correspond à une bouée d'amarrage qu'il convient de ne pas confondre avec une bouée porteuse associée à une cellule (référence 14). Un tenseur réglable 602 se trouve entre la bouée 601 et un ensemble de cellules constituant une nervure sur le bord du film. On peut distinguer les cellules 603 sur le périmètre extérieur du film, la surface du plan d'eau 15, ainsi qu'un corps-mort d'amarrage 605 au fond du bassin 609. Un câble d'amarrage 606 relie le corps-mort 605 et la bouée 601. Un autre dispositif d'amarrage 607 se trouve sur le sol au bord du plan d'eau. Un autre tenseur réglable 608 relie ce dispositif 607 à un ensemble de cellules au bord du film.

A L'intérieur du film, un sous-ensemble de cellules construites de manière robuste et organisé en réseau de nervures peut servir de squelette et supporter l'essentiel des tensions d'origines périphériques, permettant aux parties du tissu cellulaire situées entre ces nervures d'absorber des tensions adaptées à leur propre résistance structurelle.

### III.2.3. Sous-système de flottaison.

Chaque bouée déplace de préférence le volume d'eau nécessaire à sa flottaison avec une marge de sécurité. Les bouées peuvent être munies de dispositifs qui contrôlent la pression interne et la corrigent automatiquement, par exemple en fonction de paramètres déterminés localement dans la bouée ou d'instructions provenant d'unités de commande pour stabiliser le film et optimiser la production d'énergie. Alternativement, la pression peut être mesurée et corrigée manuellement.

Il est possible, selon le type de composant actif considéré, par exemple des cellules solaires flexibles, d'envisager d'autres modes de flottaison, par exemple avec une bouée en partie constituée d'éléments de captage, plutôt que d'en être le support mécanique.

En outre, le système de flottaison peut être constitué de matériaux légers et rigides (mousses, coques).

### III.2.4. Sous-système de stabilisation du film.

Le principe de stabilisation du film consiste à retirer de chacune des formes naturelles d'énergie actives dans l'environnement et propres à déstabiliser l'installation. La quantité d'énergie potentiellement déstabilisante est transformée en électricité. Ces moyens de production d'électricité peuvent être commandés de manière à optimiser la production d'électricité tout en stabilisant au mieux le film.

### III.2.4.1. Stabilisation de la houle.

L'énergie de la houle se manifeste en déplaçant verticalement les cellules de la surface de production. Ce mouvement peut être atténué, notamment par les cellules en bordure du film, et l'énergie ainsi captée peut être transformée en électricité.

Un mode de réalisation préférentiel de l'invention comporte un système de stabilisation contre la houle basé sur un contrôle des tensions superficielles dues aux surfaces de contact entre les cellules et le plan d'eau.

### III.2.4.2. Stabilisation du vent.

La stabilisation contre le vent consiste à disposer en nombre suffisant et à des emplacements choisis, des cellules dotées d'un dispositif retirant l'énergie au vent. Un mode de réalisation préférentiel de l'invention emploie de manière non restrictive, des éoliennes à axe vertical (voir l'illustration de la figure 4 décrite plus haut) qui transforment la part d'énergie potentiellement déstabilisante du vent en électricité en tant que système de stabilisation. Ce type d'appareil est conçu pour fonctionner dans des vents turbulents et peut donc être disposé sur une plate-forme mobile comme une cellule du film.

### III.2.4.3. Stabilisation du courant de l'eau.

Le courant de l'eau est un élément qui peut avoir le même effet sous la surface du film cellulaire que le vent au dessus de la surface du plan d'eau, générant des tensions de nature à le déstabiliser. Dans ce cas, des hélices à axe vertical et/ou horizontal peuvent être employées pour retirer le trop d'énergie au courant (voir l'illustration des figures 5a et 5b décrites plus haut).

Selon un mode de réalisation préférentiel de l'invention, un film cellulaire comporte un système de stabilisation contre les courants à l'aide d'hélices à axe vertical et/ou horizontal agissant en dessous de la surface du liquide pour transformer l'énergie mécanique des courants en énergie électrique récupérée par le sous-système de collecte d'électricité du film.

### III.2.4.4. Stabilisation du gel.

Les cellules peuvent être conçues pour se rétracter au dessus de la surface en cas de gel. Suite à une solidification de la surface du plan d'eau, l'installation se trouve donc posée en partie ou en totalité sur une couche de glace. Les dispositifs subaquatiques (voir l'illustration de la figure 5 décrite plus haut) qui pourraient devenir captifs du gel peuvent être conçus de manière à se désolidariser de la cellule si les forces dues au déplacement de masses solidifiées par le gel menacent de l'endommager.

Des moyens de protection passifs contre le vent, la houle, le courant et le gel peuvent aussi être mis en oeuvre. Ces moyens peuvent être intégrés au film ou être placés séparément à sa bordure.

### III.2.5. Sous-système de collecte d'énergie de l'environnement.

Chacun des types de cellules productrices d'électricité du sous-système de stabilisation peut être engagé en tout temps pour transformer en électricité la forme d'énergie correspondante, même si elle est présente dans l'environnement à des niveaux faibles.

En outre, le film peut être employé pour capter l'énergie solaire à l'aide de dispositifs photovoltaïques. Le sous-système de captage de l'énergie photovoltaïque peut alors se composer 1) d'un ensemble de cellules photovoltaïques, regroupées par exemple sur un panneau orientable et inclinable (voir par exemple l'illustration de la figure 3 décrite plus haut) ; et 2) d'un ensemble (facultatif) modulable de réflecteurs permettant de diriger un supplément de lumière sur la partie active des panneaux. La technologie des cellules photovoltaïques permet de concevoir des panneaux plans, actifs des deux côtés, les réflecteurs peuvent être par exemple, les bouées elles-mêmes qui peuvent être recouvertes de peintures réfléchissantes.

Les cellules du film sont disposées sur un plan horizontal, ce qui est garanti par la surface de l'eau et permet de tirer parti de manière dynamique de l'énergie photovoltaïque présente à chaque moment dans l'environnement. En effet, la quantité d'énergie produite par un panneau peut être mesurée à tout moment et l'orientation, ainsi que l'inclinaison, des panneaux peuvent être optimisées de manière à maximiser le captage d'énergie lumineuse présente de manière directe ou de manière indirecte à la surface des panneaux. Les panneaux peuvent aussi se coucher horizontalement en cas de vent important.

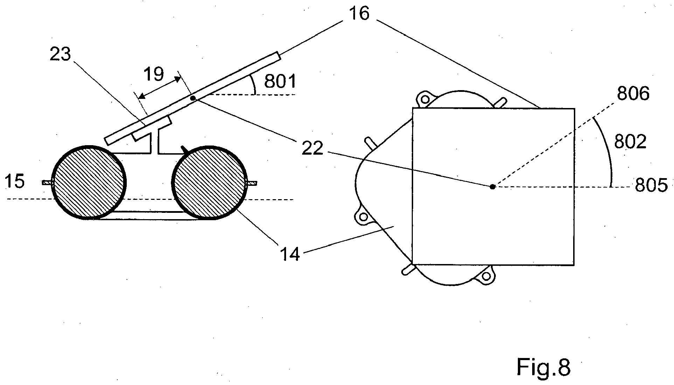

Ce réglagè s'effectue à l'aide du sous-système de contrôle automatique (voir III.2.8 ci-dessous) par un programme qui calcule trois paramètres de positionnement de chaque panneau comme illustré sur les figures 8 et 9 décrites ci-dessous.

La figure 8 représente la disposition d'un panneau 16 photovoltaïque incliné et orienté relativement à une cellule. Dans la partie de gauche, une coupe verticale orthogonale au panneau et passant par son centre 22. Dans la partie de droite, une vue verticale depuis le dessus du plan d'eau. Les références 801 et 802 correspondent respectivement à l'inclinaison et l'azimut (orientation), soit l'angle formé à un moment donné entre l'axe de symétrie du panneau 805 et l'axe de symétrie de la cellule carrée 806. L'azimut 802 est un paramètre variable mesuré par rapport à une référence quelconque interne ou externe à la cellule. Le fait d'illustrer l'azimut à l'aide de l'axe de symétrie d'une cellule carrée 806 n'est pas une restriction du concept. On peut distinguer l'intervalle 19 entre le point d'attache 23 du panneau sur le support solidaire du noyau de la cellule et le centre géométrique du panneau 22. On peut par ailleurs distinguer la ligne de flottaison 15 et la bouée 14.

La figure 9 représente le mécanisme d'attache du panneau 16 au noyau de la cellule (non représenté), permettant de régler pour le panneau 16 les trois paramètres de positionnement, soit l'inclinaison (rotation autour de l'axe 901), l'orientation (rotation autour de l'axe 902) et l'intervalle (distance 19) entre le point d'attache 23 et le centre 22 du panneau 16 obtenu en déplaçant le panneau selon la direction illustrée par la flèche 904 sur un rail 907 qui peut être crénelé.

Le programme peut s'exécuter sur une unité de contrôle autonome localisée dans la cellule ou dans un centre de contrôle regroupant cette fonction pour plusieurs cellules. Un contrôle décentralisé peut permettre un meilleur rendement si les conditions varient fortement au niveau local sur de grandes installations.

Le premier paramètre est l'inclinaison du panneau, c'est-à-dire l'angle que forme la surface plane du panneau avec la surface du plan d'eau. Le deuxième paramètre est l'orientation du panneau, c'est-à-dire l'azimut longitudinal que forme la perpendiculaire au plan du panneau avec l'axe terrestre. Le troisième est l'intervalle entre le point d'attache et le centre de gravité du panneau, qui permet de régler la position du panneau par rapport à la cellule sur laquelle il est fixé, notamment par rapport aux réflecteurs environnants et cellules voisines.

Ces réglages peuvent être effectués à l'aide de la commande numérique de petits moteurs logés dans le noyau de la cellule et alimentés par le panneau lui-même.

La forme et la dimension du panneau sont calculées en fonction des meilleurs rendements possibles à l'endroit où est déployée l'installation. Sur la figure 8 décrite plus haut, la disposition des éléments est exagérée pour illustrer les différentes caractéristiques. Si les inclinaisons idéales du panneau s'approchent de l'horizontale (latitudes basses), le quotient entre surface du panneau et aire occupée par la cellule sur le plan d'eau pourra s'approcher de 1. Aux latitudes plus élevées, il pourra être plus intéressant de diminuer la surface des panneaux tout en optimisant la capture de lumière indirecte en jouant en temps réel sur ses trois paramètres de positionnement.

### III.2.6. Sous-système de collecte d'électricité.

Ce sous système emprunte le réseau de nervures et est composé d'un collecteur qui draine la production individuelle des cellules, la multiplexe et la conduit en direction d'une installation connectée à un réseau de distribution externe ou à un accumulateur. Un transport d'électricité par les cellules elles-mêmes est aussi envisageable.

Selon une variante préférentielle de l'invention, au moins certaines cellules sont reliées électriquement à un réseau de nervure comportant des câbles électriques entre les rangées de cellules pour transporter l'énergie produite hors du film.

### III.2.7. Sous-système de maintenance.

Ce système peut être conçu de manière que chaque cellule soit accessible par une personne au cas où une action de maintenance serait nécessaire. L'accès peut être rendu possible en quadrillant le film avec des chemins d'accès de tailles variables (permettant de faire passer des véhicules à la surface des installations de grandes dimensions) et en réglant en fonction des contraintes mécaniques engendrées les paramètres liés à la rigidité structurelle et aux tensions superficielles relatives aux cellules constituant les nervures.

### III.2.8. Sous-système de contrôle automatique.

Chaque cellule peut être munie d'une unité de contrôle autonome, comme par exemple un microprocesseur, pour commander un ou plusieurs paramètres de fonctionnement et pour mesurer une ou plusieurs grandeurs, ainsi qu'une unité de communication la reliant par fil ou par ondes à une centrale de commande de l'installation. Un centre de contrôle central ou plusieurs centres de contrôle distribués, potentiellement flottants, transmettent des signaux de commande aux cellules pour interpréter des grandeurs mesurées par différentes cellules. L'unité de contrôle et ses périphériques peuvent établir les diagnostics de la cellule et les transmettre à la centrale de commande qui peut définir les mesures adéquates à prendre. Celles-ci peuvent être par exemple, mais ne sont pas restreintes à, la désactivation ou l'activation d'un composant de captage ou l'adaptation de son rendement; ou bien l'adaptation de la pression pneumatique, si la bouée est munie d'un système de mesure de la pression et qu'elle est reliée à un réseau de distribution d'air comprimé. Le cas échéant, le sous-système de contrôle comprend les moyens techniques nécessaires à la distribution de l'information pour commander des systèmes numériques de commande logés dans le noyau de la cellule, de l'air comprimé destiné à gonfler en temps réel les bouées, voire de l'énergie dans le cas des cellules qui ne sont pas autonomes en énergie ou qui ne disposent pas d'électricité à la tension et fréquence désirée. En outre, certains de ces calculs peuvent être faits localement par l'unité de contrôle autonome de la cellule, par exemple pour mesurer le rendement électrique du panneau photovoltaïque et calculer la valeur des paramètres de positionnement nécessaires pour maximiser ce rendement à un moment donné (voir l'illustration des figures 8 et 9 décrites plus haut). Des moyens de calculs peuvent par ailleurs être prévus pour permettre d'exécuter un programme informatique destiné à stabiliser le film en fonction de la houle, du vent et/ou de courants subaquatiques. Pour ce faire, le programme informatique peut par exemple commander non seulement le gonflage des bouées, mais aussi la tension entre des cellules et/ou la collecte d'énergie.

Des capteurs permettent de déterminer le niveau de production (flux entrant) d'une cellule, ainsi que ses états comme le niveau de flottaison, la pression pneumatique, le niveau de charge des batteries, la tension sur les attaches, la température externe et celle de certains composants, l'humidité à l'intérieur du noyau, la conductivité de certains composants, etc.

Des logiciels embarqués de diagnostics essentiels au bon fonctionnement du système, analysent les informations des capteurs. Ils doivent en outre de préférence être capables de mesurer la bande passante du système de communication, le niveau de ses propres batteries, l'aptitude des capteurs et des actionneurs à fonctionner sur commande. Des actionneurs permettent de contrôler les différents composants actifs de la cellule, notamment pour la gestion de la production locale d'énergie (part stockée, part évacuée, part consommée etc.).

On peut distinguer deux niveaux de contrôle : le contrôle de la stabilité et de la production du film qui se fait en temps réel, alors que le contrôle de l'installation à des fins de maintenance se fait à des intervalles plus longs.

Le problème de salissure des composants actifs ou de fouling des surfaces subaquatiques est un problème de contrôle à intervalles plus longs. La mesure de la performance individuelle des cellules comparée à un étalon placé dans le même environnement peut permettre d'évaluer un degré de perte, voir une panne. A ce moment des mesures de maintenance doivent être prises. Cependant, sur de très grandes surfaces, la maintenance s'effectue plutôt périodiquement par rotation, sans qu'elle ne soit basée nécessairement sur le diagnostic d'un disfonctionnement local.

En outre, les matériaux en contact permanent avec l'eau (dessous de la bouée, partie inférieure externe du noyau) peuvent être construites ou couvertes de matériaux qui retardent le fouling par des organismes aquatiques.

Selon une variante préférentielle de l'invention, chaque cellule comporte des moyens de connexion de données pour la connecter à plusieurs cellules voisines afin d'échanger des signaux numériques de contrôle. Au moins certaines cellules peuvent être reliées électriquement à un réseau de nervure comportant des câbles électriques entre les rangées de cellules pour transporter des signaux électriques de commandes des cellules et/ou relatifs à l'état des cellules.

Le film cellulaire selon l'invention comporte dans un mode de réalisation préférentiel les moyens de contrôle suivants:
- de paramètres d'état et de production, et/ou
- de la pression d'air de bouées de flottaison, et/ou
- de tensions latérales de bouées de flottaison, et/ou
- du rendement de panneau solaire, et/ou
- de l'activation ou la désactivation de la collecte et de la transformation d'énergie. Au moins une des cellules du film est munie de préférence de moyens numériques pour commander la tension entre les cellules, la production d'énergie sur différentes cellules, l'état des moyens de production d'énergie, le gonflage de bouées, et/ou d'autres paramètres du film. Un plan du film peut par exemple être stocké dans les moyens numériques de commande de la cellule, et une identification électronique de chaque cellule permet de mettre à jour le plan lorsqu'une cellule est ajoutée ou supprimée.

Nous allons maintenant décrire plus en détail une installation de production industrielle d'électricité sur plan d'eau libre (application III ci-dessus).

La bouée peut être monolithique et de conception unique. Sa fabrication, notamment pour ce qui est des ceintures structurantes (voir figure 3), peut exploiter des techniques employées pour la fabrication industrielle de pneus modernes pour véhicules automobiles terrestres. Les matériaux et les contraintes mécaniques ou pneumatiques sont cependant différents, de même que la forme, la structure interne et les attaches qui peuvent être intégrées à la bouée (voir figure 1). Pour le contrôle automatique de la pression, des valves électromécaniques à commande numérique peuvent être employées. Les bouées peuvent être testées en usine et gonflées sur le site de déploiement au moment de leur assemblage avec le noyau pour former les cellules opérationnelles du film cellulaire.

Le noyau de la cellule est une boîte cylindrique qui peut être fabriquée en matière plastique ou composite, constituée de deux parties dont l'agencement permet de loger et de ranger les différents éléments nécessaires au contrôle de la cellule. La partie inférieure contient en outre un lest (par exemple un ballast de pierre) dont la masse correspond aux paramètres calculés à partir des caractéristiques de l'environnement naturel de l'installation. Le noyau est étanche. L'étanchéité est assurée par un joint et par la bouée gonflée qui fait pression sur les bords du noyau et sur le joint.

La figure 7 représente le montage d'un noyau en deux parties (701 la partie supérieure et 702 la partie inférieure) et le scellement à l'aide d'un joint circulaire (703) de la bouée gonflée 14. Lors du montage les pièces 701 et 702 sont appliquées selon les directions 705 et 706 sur le joint 703. Cette opération peut être faite en usine et la bouée 14 peut être sertie autour du noyau juste avant d'être gonflée. Les dimensions de la partie supérieure du noyau 12 et l'élasticité de la membrane de la bouée 14 sont conçues de manière que cela soit possible sans rupture des propriétés mécaniques de l'un ou l'autre composant. Lors du gonflage, la pression de la bouée s'applique au joint 703 selon les flèches 707 et 708.

Une fois le noyau assemblé et la bouée gonflée, noyau et bouée sont solidaires. La surface de la cellule qui sera située en dessous de la ligne de flottaison est construite de manière que l'adhérence avec le milieu liquide soit maximale, conformément à l'illustration de la figure 2. La forme des bords de la cellule peut être réalisée de manière à assurer que la cellule se rétracte au dessus de la surface au cas où la surface du plan d'eau gèlerait.

Les panneaux photovoltaïques peuvent être constitués de composants standards dont les rendements sont adaptés aux objectifs calculés pour l'installation globale. Les panneaux sont amovibles et recyclables. Leur support est construit solidairement avec le noyau de la cellule, conformément à l'illustration de la figure 3.

Dans le cas d'une cellule de captage photovoltaïque, le panneau est amovible et interchangeable, sans que la cellule ne doive être retirée de la surface de production. Il est orientable et inclinable, manuellement ou automatiquement, selon la configuration choisie. Les panneaux photovoltaïques étant amovibles, ils n'occupent qu'un faible volume lorsqu'ils sont stockés ou transportés.

Les éoliennes à axe vertical du sous-système de stabilisation au vent sont disponibles sur le marché dans diverses tailles et puissances.

Le montage et le déploiement d'une installation peuvent se faire par incréments successifs dont chaque étape concerne un ensemble donné de cellules. Par exemple, mais de manière non restrictive, un incrément peut être constitué d'une rangée de cellules. Cette opération peut se faire depuis un ponton mobile, depuis l'un des éléments de la structure d'amarrage ou depuis le bord du plan d'eau par exemple. Les opérations sont:
1) assembler les noyaux (cette opération peut se faire en usine) ;
2) relier les bouées de la rangée considérée entre elles ;
3) relier les bouées aux cellules de production déjà déployées aux emplacements voisins ;
4) gonfler à son tour chaque bouée de la rangée en fixant le noyau et tester la cellule ;
5) le cas échéant, fixer et tester les panneaux photovoltaïques ;
6) brancher les cellules de production électrique aux réseaux de maintenance;
7) tester les cellules globalement, notamment et le cas échéant toutes les commandes contrôlées par réseau informatique (pression des bouées, inclinaison, orientation, intervalle, lecture des mesures, etc.) ;
8) activer les dispositifs de captage d'énergie et les brancher au sous-système de collecte d'électricité;
9) larguer les cellules sur le plan d'eau et les mettre en position en corrigeant les tensions latérales du dispositif d'amarrage. Le largage peut aussi se faire en retirant le ponton mobile, le cas échéant.

Le démontage et le retrait de tout ou de partie de l'installation peuvent se faire en suivant les opérations dans l'ordre inverse.

Le câblage servant à évacuer le courant électrique produit par le film cellulaire peut être imperméable et les connexions entre réseau de câblage et cellules de production peuvent être conçues de manière à résister à leur exposition aux éléments. Le sous-système de collecte d'électricité est maintenu hors d'eau en le faisant passer par dessus les cellules et en le multiplexant en direction des cellules qui constituent le réseau de nervures du film. Les installations de raccordement du film aux réseaux de distribution électrique comprennent en particulier les dispositifs (onduleurs, transformateurs, etc.) nécessaires à une bonne distribution de l'énergie produite. Ces installations sont externes au film cellulaire.

Les actions de maintenance sur les cellules du film peuvent être, par exemple, mais de manière non restrictive : changer un panneau solaire ; retirer la cellule de la surface de production ; mesurer et corriger la pression de la bouée ; mesurer et corriger les tensions latérales; désactiver ou activer la production électrique de la cellule ; orienter, incliner ou déplacer un panneau photovoltaïque ; déclencher une alarme. Mis à part les opérations qui requièrent une manipulation comme changer le panneau d'une cellule ou retirer une cellule du film, la plupart des opérations de maintenance peuvent être automatisées en dotant les sous-systèmes correspondants des dispositifs adéquats. Ces dispositifs peuvent être constitués, par exemple mais de manière non restrictive, par un microprocesseur et un système de commande numérique connectés aux dispositifs de mesure et de commande à l'interface entre les cellules et les différents sous-systèmes du film (I.5 à I.8). La communication entre la centrale de commande de l'installation et les unités de contrôle autonome des cellules peut être réalisée par réseau câblé ou par réseau hertzien.

Selon l'usage qui est fait du film, un contrôle individuel de chaque cellule ou de certaines cellules peut être souhaitable. Il s'agit alors de faire communiquer un ou plusieurs centres de contrôle (ordinateurs centraux) avec un nombre de cellules ou d'agents dans les cellules qui peut être très important. La configuration du film en un ensemble de réseaux virtuels de communication sans fil, constitués chacun par une ou plusieurs antennes résidentes sur certaines cellules et réparties sur le film de manière à définir des zones de couverture et d'adressage délimitées, permet de communiquer en point à point entre un ordinateur central et chaque cellule individuelle. De cette manière également, les cellules d'un même sous-réseau peuvent communiquer entre elles directement et les cellules plus éloignées peuvent communiquer par routage à travers le réseau global. Selon les algorithmes employés pour produire localement des flux d'énergie de fréquence et d'intensité déterminée, la communication entre cellules pour la répartition des tâches de gestion des flux d'énergie peut être utile.

Dans le cas d'un détachement accidentel d'une ou plusieurs cellules, il est possible de la ou les retirer et de les remplacer de façon modulaire. La difficulté est l'accès à chaque cellule individuellement; cet accès pourra être facilité en construisant dans le film un réseau de chemins d'accès utilisables par des humains voire des véhicules. Le problème de la destruction partielle de la structure relève d'un calcul actuariel du risque et de planification pour les reconfigurations éventuelles. La configuration initiale, notamment la stratégie de stabilisation et l'investissement dans la solidité des cellules et du réseau de nervures, doit prendre en compte les objectifs économiques de l'installation et les facteurs connus de son environnement comme la fréquence et la force habituelle des intempéries.

Bien qu'adapté aux plans d'eaux, les films selon l'invention peuvent parallèlement être déployés sur le sol, par exemple sur des champs en dehors de la période des cultures ou sur un sol aride, sans qu'il n'y ait besoin de les aménager et d'y construire des supports immobiliers, ou sur des surfaces planes aménagées comme des parkings, des terrains de sport ou des toits plats de bâtiments industriels.

Il est par ailleurs possible, comme mentionné plus haut dans le bref résumé de l'invention, d'utiliser un film biologique qui serait un tissu de cellules greffées à la surface de la peau d'un patient et permettant de produire avec la lumière ambiante l'énergie nécessaire au fonctionnement d'un appareil comme un diffuseur de médicament, une pompe, un capteur, une balise de localisation, etc. résidant à l'intérieur de son organisme.

Ici ce seraient les propriétés de flexibilité, de solidité et de modularité du film cellulaire qui seraient employées, ainsi que son aptitude à capter l'énergie présente dans l'environnement, plutôt que le fait qu'il flotterait sur un plan d'eau.

De manière générale, les appareils destinés à capter des énergies renouvelables, d'une part sont exposés aux éléments, et d'autre part doivent avoir une longue durée de vie car ils sont peu rentables à court terme. Pour ce qui est des matériaux de construction des bouées et des infrastructures du film lui-même, il s'agit d'employer des matériaux adaptés au milieu, à la stratégie de maintenance, de reconfiguration, et de remplacement du film, ainsi qu'au quotient coût/durabilité qui est lié à ces stratégies.

### IV : Application à l'alimentation de navires à propulsion électrique

Un film cellulaire selon l'invention peut par ailleurs être utilisé comme source d'alimentation électrique pour un navire en mouvement qui tracte l'installation à la surface du milieu sur lequel il se déplace. L'installation est alors mobile dans le sens qu'elle peut être déplacée à la surface du milieu liquide ou en direction d'un autre site sans qu'il ne soit nécessaire de modifier les cellules. Sous cette forme, le film cellulaire joue le rôle d'une voile solaire essentiellement horizontale et tirée dans le sillage du navire, avec une puissance de production pouvant aller de quelques kW pour des installations de petites dimensions (quelques m2) jusqu'à plusieurs MW ou plus (installations de plusieurs ha) permettant d'alimenter des navires de grandes dimensions de la marine marchande maritime.

L'invention est illustrée sur la figure 10 montrant une voile solaire 101 traînée par un navire 102 dont le sens du déplacement est indiqué par la flèche 103.

Dans ce cas, le réseau de nervures peut être constitué d'éléments plus rigides au dessous desquels des ailes peuvent être fixées afin de soulever le film comme un hydrofoil lorsque le navire prend de la vitesse. Des voiles ou des ailes commandables peuvent aussi être montées sur le film pour l'entraîner et le soulever. Les cellules de captage peuvent alors être construites de manière plus légère et conforme aux tensions particulières qui s'appliquent à un film en mouvement à la surface du plan d'eau.

Des dispositifs sont placés en périphérie de la voile de manière à la maintenir tendue lorsque le navire freine ou que la voile est soumise à des éléments comme une houle ou un vent latéraux.

Dans cette situation, les composants actifs sont solidaires des cellules. Le réseau de captage canalise directement le courant en direction des batteries du navire. Le film est conçu de manière à pouvoir être replié à l'intérieur d'un ou de plusieurs habitacles le protégeant d'intempéries importantes. Ces éléments peuvent être chargés sur le navire.

### V. Application à la production industrielle de courant électrique de qualité

Dans un film cellulaire destiné à fournir de l'énergie à un réseau externe, chaque cellule peut:
- évacuer tout ou partie de l'énergie produite localement ;
- stocker tout ou partie de l'énergie produite localement ;
- évacuer tout ou partie de l'énergie précédemment stockée localement ;
- diffuser dans l'environnement le surplus d'énergie qui ne pourrait être ni stocké, ni évacué ;
- en outre, chaque cellule peut stocker de l'énergie en provenance d'autres cellules.

Dans le cas de la production d'électricité d'origine photovoltaïque, le courant produit est de faible qualité: son intensité dépend en temps réel des conditions météo (passage de nuages, intempéries, etc.) et il est difficile de le réguler.

Le contrôle individuel des flux entrants et sortants dans un grand nombre de cellules permet de produire aux sorties du dispositif de production industrielle, des courants de qualité, d'amplitudes et de phases réglables selon les besoins du réseau. Ce contrôle peut se faire sur la base de l'exécution d'algorithmes sur les microprocesseurs du sous-système de contrôle de l'installation.

**Liste des références**

| | |
|---|---|
| 11 | Cellule |
| 12 | Noyau |
| 13 | Attaches |
| 14 | Bouée « porteuse » associée à la cellule |
| 15 | Surface du plan d'eau |
| 16 | Panneau |
| 17 | Axe vertical |
| 18 | Alternateur |
| 19 | Intervalle entre le centre géométrique du panneau et son point d'attache |
| 20 | Support du panneau |
| 21 | Lest |
| 22 | Centre du panneau |
| 23 | Point d'attache |
| 201 | Enveloppe de la bouée |
| 202 | Ceinture |
| 206 | Valve |
| 401 | Hélice de l'éolienne |
| 501 | Hélice subaquatique |
| 502 | Axe horizontal |
| 503 | Sens du courant subaquatique |
| 601 | Bouée d'amarrage |
| 602 | Tenseur réglable dans l'eau |
| 603 | Cellules du périmètre extérieur du film |
| 605 | Corps mort d'amarrage |
| 606 | Câble d'amarrage |
| 607 | Dispositif d'amarrage au sol |
| 608 | Tenseur réglable au sol |
| 609 | Fond du bassin |
| 701 | Partie supérieure du noyau en 2 parties |
| 702 | Partie inférieure du noyau en 2 parties |
| 703 | Joint circulaire de jonction |
| 705 | Première direction d'application du joint |
| 706 | Deuxième direction d'application du joint |
| 707 | Première direction d'application de pression lors du gonflage |
| 708 | Deuxième direction d'applications de pression lors du gonflage |
| 801 | Angle d'inclinaison du panneau |
| 802 | Angle d'orientation du panneau |
| 805 | Axe de symétrie du panneau |
| 806 | Axe de symétrie de la cellule carrée |
| 901 | Axe de rotation déterminant l'inclinaison |
| 902 | Axe pour l'orientation du panneau |
| 904 | Direction du déplacement du panneau |
| 907 | Rail de déplacement du panneau crénelé |
| 101 | Voile solaire |
| 102 | Bateau |
| 103 | Sens de déplacement du bateau |

## Revendications

1. Film cellulaire composé d'une ou de plusieurs couches de cellules (11) flottantes destinées à capter l'énergie présente à la surface d'un milieu liquide (15) afin de la transformer en une forme d'énergie transportée en dehors du film,
ledit film comportant des cellules flottantes munies d'éléments photovoltaiques,
ledit film comportant des éléments de connexion (13) mécanique et électrique entre cellules permettant de les connecter entre elles de manière amovible,
**caractérisé par** :
un système de stabilisation contre la houle en contrôlant des tensions dans lesdits éléments de connexion mécanique ; et par
des moyens numériques de commande pour contrôler automatiquement en temps réel la position des cellules et/ou la tension entre les cellules (601,602,603,605,606,607,608).

2. Film cellulaire selon la revendication 1, la position des cellules et/ou la tension entre les cellules étant contrôlés automatiquement en ajustant la tension d'un réseau de câbles entre les dites cellules (11).

3. Film cellulaire selon l'une des revendications précédentes, chaque dite cellule (11) étant munie d'une unité de contrôle, pour commander un ou plusieurs paramètres de fonctionnement et pour mesurer une ou plusieurs grandeurs, le film intégrant un ou plusieurs centres de contrôle centraux ou distribués pour transmettre des signaux de commande auxdites cellules et pour interpréter des grandeurs mesurées par différentes dites cellules (11).

4. Film cellulaire selon la revendication 3, comportant des moyens de calcul pour exécuter un programme informatique destiné à stabiliser le film en fonction de la houle, du vent et/ou de courants subaquatiques, ledit programme informatique commandant le gonflage de bouées, et/ou la tension entre des cellules et/ou la collecte d'énergie de manière à stabiliser le film.

5. Film cellulaire selon la revendication 1, destiné à la production industrielle d'énergie sur plans d'eau libres, et comportant des dites cellules (11) destinées à récupérer l'énergie des courants subaquatiques,

6. Film cellulaire selon l'une des revendications précédentes, chaque dite cellule (11) comportant des moyens de connexion de données pour la connecter électriquement à plusieurs cellules voisines afin d'échanger des signaux numériques de contrôle.

7. Film cellulaire selon l'une des revendications précédentes, comportant un système de stabilisation contre le vent à l'aide d'éoliennes (401) à axe vertical (17) ou horizontal, pour absorber l'énergie mécanique du vent et la convertir en électricité.

8. Film cellulaire selon l'une des revendications précédentes, chaque dite cellule (11) étant arrangée pour se rétracter à la surface si le plan d'eau gèle.

9. Film cellulaire selon l'une des revendications précédentes, au moins une desdites cellules comportant :
une bouée pneumatique (14) ;
des dits éléments de connexion mécaniques (13) pour attacher la cellule à ses voisines;
un noyau (12) solidaire de la bouée dans lequel sont logés des éléments de contrôle de la cellule, et/ou un lest (21) ;
un composant de captage d'énergie (16), lié solidairement audit noyau (12).

10. Film cellulaire selon la revendication 9, comportant une ou plusieurs cellules munies de moyens numériques de commande pour commander le gonflage de bouées.

11. Film cellulaire selon l'une des revendications 1 à 10, un plan dudit film étant stocké dans lesdits moyens numériques de commande, chaque dite cellule (11) étant munie d'une identification électronique permettant de mettre à jour automatiquement ledit plan lorsqu'une cellule est ajoutée ou supprimée.

12. Film cellulaire selon l'une des revendications précédentes, comprenant des capteurs permettant de déterminer le niveau de production et l'état des cellules, ainsi qu'un logiciel embarqué de diagnostic pour analyser les informations desdits capteurs.

13. Cellule (11) flottante comportant :
une bouée pneumatique (14) ;
des moyens de connexion mécanique et électrique (13) pour connecter la cellule à des cellules voisines;
un composant de captage d'énergie (16), lié solidairement audit noyau (12),
**caractérisée par** :
un système de contrôle pour contrôler la tension entre ladite cellule et ses voisines ; et par
des moyens numériques pour commander la tension entre cellules.

14. Utilisation d'un film cellulaire selon l'une des revendications 1 à 12 comme source d'alimentation électrique pour un navire en mouvement qui tracte le film à la surface du milieu sur lequel il se déplace.

## Patentansprüche

1. Zellenfilm aufweisend eine oder mehrere Schichten von schwimmenden oder treibenden Zellen (11) für den Abgriff der auf der Oberfläche des flüssigen Mediums (15) gegenwärtigen Energie zur Umwandlung dieser in eine aus dem Film transportierte Energieform, wobei dieser Film schwimmende oder treibende Zellen (11), die mit photovoltaischen Elementen ausgestattet sind, aufweist, wobei dieser Film mechanische und elektrische Verbindungselemente (13) zwischen den Zellen aufweist, um diese in einer entfernbaren Weise miteinander zu verbinden, **gekennzeichnet durch**: ein Stabilisierungssystem gegen den Schwell, das die Spannung der mechanischen Elemente kontrolliert; und digitale Steuermittel für das automatische steuern der Position der Zellen und/oder der Spannung zwischen den Zellen (601, 602, 603, 605, 606, 607, 608).

2. Zellenfilm nach Anspruch 1, wobei die Position der Zellen und/oder der Spannung zwischen den Zellen automatisch durch das Anpassen der Spannung eines Kabelnetwerks zwischen den Zellen (11) gesteuert wird.

3. Zellenfilm nach einem der vorigen Ansprüche, wobei jede der Zellen (11) mit einer Steuereinheit für das steuern einer oder mehrerer Betriebsparameter und für das Messen einer oder mehrere Variablen ausgestattet ist, wobei der Film eine oder mehrere zentralisierte oder verteilte Steuerzentren zur Übertragung der Steuersignale an diese Zellen und zum Interpretieren der verschiedenen von den Zellen (11) gemessenen Variablen aufweist.

4. Zellenfilm nach Anspruch 3, aufweisend
Verarbeitungsressourcen, um ein Computerprogramm zur Stabilisierung des Films in Abhängigkeit von Wellen, Wind und/oder Unterwasserströmungen auszuführen, wobei das Computerprogramm das Aufblasen der Bojen und/oder die Spannung zwischen den Zellen und/oder die Energieaufnahme so steuert, um den Film zu stabilisieren.

5. Zellenfilm nach Anspruch 1 für die industrielle Energieproduktion auf offenen Wasserflächen und aufweisend die Zellen ausgebildet um Energie von Unterwasserströmungen zu gewinnen.

6. Zellenfilm nach einem der vorigen Ansprüche, wobei jede der Zellen (11) Datenverbindungsgeräte für das elektrische Verbinden mit einer Mehrzahl von benachbarten Zellen aufweist, um digitale Steuersignale auszutauschen.

7. Zellenfilm nach einem der vorigen Ansprüche, aufweisend ein Stabilisierungssystem gegen Wind unter Verwendung von Windturbinen (401), die entweder eine Vertikale (17) oder horizontale Achse haben, um die mechanische Energie des Winds zu absorbieren und in elektrische Energie umzuwandeln.

8. Zellenfilm nach einem der vorigen Ansprüche, wobei jede der Zellen (11) ausgebildet ist, sich zurückzuziehen, wenn das Wasser gefriert.

9. Zellenfilm nach einem der vorigen Ansprüche, wobei mindestens eine der Zellen aufweist:
eine aufblasbare Boje (14);
mechanische Verbindungselemente (13) für das befestigen der Zellen an seinen Nachbarn;
ein an der Boje befestigter Kern (12), worin die Zellensteuerungselemente und/oder Gewichte (21) untergebracht sind;
eine Energieaufnahmekomponente (16), die integral mit dem Kern (12) verbunden ist.

10. Zellenfilm nach Anspruch 9, aufweisend einen oder mehr Zellen mit digitalen Steuergeräten für die Steuerung des Aufblasens der Bojen.

11. Zellenfilm nach einem der Ansprüche 1 bis 10, wobei ein Plan des Film in dem digitalen Steuergerät gespeichert wird, wobei jede Zelle (11) mit einer elektronischen Identifikation ausgestattet ist für das automatische Updaten des Plans, wenn eine Zelle hinzugefügt oder entfernt wird.

12. Zellenfilm nach einem der vorigen Ansprüche, aufweisend Sensoren, um das Niveau der Produktion und den Zustand der Zellen zu bestimmen und eine Selbstdiagnosesoftware, um die Informationen der Sensoren zu analysieren.

13. Schwimmende oder treibende Zelle (11) aufweisend:
eine aufblasbare Boje (14);
Mittel für die mechanische und elektrische Verbindung für die Verbindung der Zelle zu benachbarten Zellen;
eine Energieaufnahmekomponente (16), die integral mit dem Kern (12) verbunden ist, **gekennzeichnet durch**:
ein Steuersystem für das Steuern der Spannung zwischen der Zelle und benachbarten Zelle; und
digitale Mittel zum Anpassen der Spannung zwischen den Zellen.

14. Verwendung des Zellenfilms nach einem der Ansprüche 1 bis 12 als Energiequelle für ein Schiff, das den Film auf der Oberfläche des Medium, auf dem es sich bewegt, hinterherzieht.

## Claims

1. Cellular film composed of one or several layers of floating cells (11) for capturing the energy present on the surface of a liquid medium (15) in order to transform it into a form of energy transported outside the film,
said film comprising floating cells provided with photovoltaic elements,
said film having mechanical and electrical connecting elements (13) between cells enabling them to be connected together in a removable manner,
**characterized by**:
a stabilizing system against the swell by controlling tensions in said mechanical connecting elements; and by
digital control means for automatically controlling in real time the position of the cells and/or the tension between the cells (601, 602, 603, 605, 606, 607, 608).

2. Cellular film according to claim 1, wherein the position of the cells and/or the tension between the cells is automatically controlled by adjusting the tension of a cable network between said cells (11).

3. Cellular film according to one of the preceding claims, each said cell (11) being provided with a control unit for controlling one or more operating parameters and for measuring one or more variables, wherein the film incorporates one or more centralized or distributed control centres for transmitting control signals to said cells and for interpreting different variables measured by said cells (11).

4. Cellular film according to claim 3, comprising computing means for executing a computer program designed for stabilizing the film depending on swell, wind and/or underwater currents, wherein said computer program controls the inflation of buoys and/or the tension between the cells and/or the collection of energy so as to stabilize the film.

5. Cellular film according to claim 1, for the industrial production of energy on open waters and comprising some said cells (11) designed to recover energy from underwater currents.

6. Cellular film according to one of the preceding claims,
wherein each said cell (11) comprises data connecting means for electrically connecting it to a plurality of adjacent cells in order to exchange digital control signals.

7. Cellular film according to one of the preceding claims, comprising a stabilizing system against the wind using wind turbines (401) with either a vertical (17) or horizontal axis, to absorb the mechanical energy of the wind and convert it into electricity.

8. Cellular film according to one of the preceding claims, each said cell (11) being arranged to retract to the surface if the body of water freezes.

9. Cellular film according to one of the preceding claims,
wherein at least one of said cells comprises:
an inflatable buoy (14);
some said mechanical connecting elements (13) for attaching the cell to its neighbours;
a core (12) integrally secured to the buoy wherein are housed the cell control elements and/or a ballast (21);
an energy capture component (16) integrally connected to said core (12).

10. Cellular film according to claim 9, comprising one or more cells provided with digital control means for controlling the inflation of buoys.

11. Cellular film according to one of claims 1 to 10, a plan of said film being stored in said digital control means, wherein each said cell (11) is provided with an electronic identification for automatically updating said plan when a cell is added or removed.

12. Cellular film according to one of the preceding claims, comprising sensors for determining the level of production and the state of the cells as well as an embedded diagnosis software for analysing information from said sensors.

13. Floating cell (11) comprising:
an inflatable buoy (14);
mechanical and electrical connection means (13) for connecting the cell to adjacent cells;
an energy capture component (16), integrally connected to said core (12),
**characterized by**:
a control system for controlling the tension between said cell and its neighbours; and by
digital means for controlling the tension between cells.

14. Use of a cellular film according to one of the claims 1 to 12 as an electric power source for a moving ship that tows the film on the surface of the medium on which it moves.
